# EUROPEAN PATENT SPECIFICATION

(11) **EP 1 058 787 B1**
(45) Date of publication and mention of the grant of the patent: **19.10.2005**
(21) Application number: 99906079.1
(22) Date of filing: 01.03.1999
(51) Int. Cl.: F03D 11/04

(54) **METHOD FOR INSTALLATION OF WIND TURBINES AT SEA, FOUNDATION FOR WIND TURBINES AND USE OF SUCH FOUNDATION**
VERFAHREN ZUR INSTALLATION EINER WINDTURBINE INS MEER, EIN FUNDAMENT FÜR WINDTURBINEN UND DER GEBRAUCH DER FUNDAMENTE
PROCEDE PERMETTANT D'INSTALLER DES EOLIENNES EN MER, FONDATION POUR LESDITES EOLIENNES ET UTILISATION DE LADITE FONDATION

(30) Priority: 27.02.1998 DK 26098; 27.02.1998 DK 26198
(43) Date of publication of application: 13.12.2000
(73) Proprietor: Bonus Energy A/S, 7330 Brande (DK)
(72) Inventor: NICKELSEN, Peder, DK-7330 Brande (DK); STIESDAL, Henrik, DK-7330 Brande (DK); OLESEN, Agnete, DK-7330 Brande (DK); THOMSEN, Jens, Schiersing, DK-7330 Brande (DK)
(74) Representative: Nielsen, Leif
(86) International application number: PCT/DK1999/000094
(87) International publication number: WO 1999/043956

(56) References cited:
- GB-A- 2 327 449
- GB-A- 2 327 970
- NO-B- 170 735
- FERGUSON MURRAY, "Structural and Economic Optimisation of OWEC Support Structure", In: PROCEEDINGS OF EUROPEAN SEMINAR ON OFFSHORE WIND ENERGY IN MEDITERRANEAN AND OTHER EUROPEAN SEAS: TECHNOLOGY AND POTENTIAL APPLICATIONS, La Maddalena, (Sardinia) 10-11 April, pages 235-247.

## Description

### TECHNICAL FIELD

The present invention relates to a bed for windmills, which bed comprises a base piece and a part of the plinth placed upon this base piece, upon which a windmill tower can be placed and fixed. Furthermore, the invention relates to an application of such bed for use by installation of a sea windmill, where the individual parts such as base piece segments and plinth pipe pieces forming part of the bed are made on an appropriate location, which is in distance from the final location of the bed, and that these individual parts are transported as example with a van craft and/or a craft to the final location, where the individual parts are placed and mounted. The invention relates also to a method for installation of windmills in the sea, which windmills are placed on such beds upon the sea bottom, with the bed and windmill comprising tower, top of mill and rotor gathered in mainly one piece in another location than the final placing of the windmill wherein bed and windmill in one piece are shipped by means of a craft and brought to the place of the final location, and wherein bed and windmill in one piece with application of a crane such as a floating crane are placed on the final location, with the placing of the bed upon the sea bottom, which in the pertinent place possibly beforehand is prepared with the intention of a stable placement of bed with windmill.

### BACKGROUND ART

In the latest years the placing of windmills in water covered areas, especially in sea areas, has gained a bigger footing, among other things with respect to the problems of finding suitable places for placing of windmills in the land, because many different relations should be considered with land based windmills, such as for instance relationships to wind, environment (noise nuisance to persons living there etc.) and relationships to transport. These relationships can easier be considered for windmills in water covered areas, but there might arise the disadvantage that the expenditures for bed and erection/installation of the windmills ceteris paribus would be bigger than for windmills placed in the land.

By windmills placed in water covered areas, especially in sea mill parks, focus has thus been put on reduction of the costs in connection with establishment of bed and so on and erection of windmills.

In the following the said windmills will for convenience be mentioned as sea mills, sea windmills, windmills in the sea or it like, but it is to be understood that it concerns windmills placed in water covered areas in general, and that the invention relates to such windmills in general, i.e. that windmills placed in lakes, bays and similar places also will be included.

By sea mills the beds can usually consist of gravitation beds or pile beds, where the latter either can be a single pile bed or a multiple pile bed, for instance a three leg bed.

By an earlier erected sea mill part gravitation beds have been applied in the form of drop box beds, which have been prepared in a dry dock for thereafter to be floated to the chosen placing and dropped. The wind mills are in this wind mill park gathered completely in an adjacent harbour, put upon barges, taken in tow to the beds for thereafter to be lifted to an upright position and moved to the beds.

At a later erected sea mill park a similar procedure has been applied, however the drop box beds were taken in tow to a barge instead of float by themselves and the mills were installed in main components with tower, top of mill and rotor mounted in each lift. At later sea mill parks single pile beds have been applied with the beds driven in and drilled down into the underground, and the mills have been installed in main components.

A series of disadvantages has been noted in connection with the applied procedures. First of all the processes are relatively complicated and laborious, which is a considerable disadvantage by working tasks in the sea. The transport relationships and the time away out in the sea because of the climate, i.e. the time period where the weather does not allow for working in the beds or wind mills, cause namely that the average cost per effective working hour is much higher than by erection of wind mills in the land.

The complicated working processes, which must take place in a definite order, implicate as well an increased risk that you are taken by surprise by bad weather or breakdown of the machinery at a very unsuitable point of time during the work flow. Furthermore, it is a price-raising factor that installation of beds and wind mills as a rule take place in two separate processes, which each gives an occasion for mobilisation costs.

With respect to relieve these disadvantages various alternative procedures have been examined in a series of concept studies. The aim has been on a superior level to reduce the costs for erecting of sea wind mills, and it has more specifically given rise to a series of proposals for procedures where the known disadvantages have been sought reduced. A proposal has thus been made for simultaneously flattening of bed and wind mill, reference is given to Murray Ferguson, "Structural and Economic Optimisation of OWEC Support Structure" in "Proceedings of European Seminar on Offshore Wind Energy in Mediterranean and other European Seas: Technology and Potential applications", La Maddalena (Sardinia), 10-11 April 1997, pages 235-247.

By the proposed procedure, which is of a kind mentioned in the preamble to claim 1, bed and wind mill are assembled on land, for instance in a dry dock or in a place from where the bed can be skidded out into the water. The needed buoyancy is brought about either by built-in buoyancy elements within the bed itself or by temporary buoyancy elements, which are fixed to the beds during the flattening. An essential advantage by a gathered or assembled flattening of bed or windmill is that the windmill can be assembled completely on or adjacent to land, so that all mounting of cables and other accessories can be finished during suitable working relationships. Dependent on the type of bed and other occasion it may even also be possible to have a trial running on or adjacent to land.

However, there is a disadvantage in connection with the proposed procedures for an assembled flattening that buoyancy elements of a considerable size are needed to give the needed buoyancy and stability. For windmills of this size of order which is expected installed in the sea in bigger amounts (i.e. windmills on or over 500 kW installed effect), the buoyancy elements will be essentially bigger than what would be integrable within usually economical frames.

If temporary buoyancy elements (for instance pontoons or its like) are applied these should similarly have a considerable size with the connected costs. The handling of such buoyancy elements in the sea is furthermore no little task, and an essential part of the saving for the mounting of the windmill will thus be lost in connection with the work on the buoyancy elements.

Another considerable disadvantage in connection with the proposed procedures is that during the dropping of the bed and windmill on the chosen location special measures must be taken to ensure the sufficient stability. If the dropping takes place by turning off the water or other ballast in the buoyancy elements the floating stability will typically be remarkably reduced during the dropping, which gives an increased risk for capsizing. Unless working is taking place during suitable or appropriate tide conditions, where the dropping can take place by simple grounding at low tide, and where you quickly can transfer the needed ballast to give stability on the bottom, will stability problems thus normally implicate that a bed with integrated buoyancy elements will need an external stabilization during the dropping, for instance in form of a support from a crane.

If temporary buoyancy elements are applied there will typically be a need for the dropping taking place by lowering from the buoyancy elements. This requires thus that there is a capstan capacity in the buoyancy elements and a certain form for mutual connection between the buoyancy elements, and considerable requirements for control of the process. A consequence of these stability problems will furthermore be that insurance only is possible on the background of very comprehensive working and procedure descriptions, model experiments, evaluations of security and so on, which can rise the price of the process considerably.

Frequently beds for windmills are prepared on the location for the final placing of the windmill, when land-based windmills are concerned, where as for sea mills the bed is prepared for another location than the final placing, after which the bed is transported to the final placing, e.g. as disclosed in NO-A-170 735. This transport is taken place by shipping and possibly also by a transport on land, because often not all necessary facilities are available at the water front for preparation of beds. It is thus required that all necessary transport on land, shipping, storing, and harbour facilities are available which can be a limiting factor by installation of sea windmills, especially when parts of bed with considerable physical dimensions, such as an example gravitation and multiple pile beds are concerned.

### DISCLOSURE OF THE INVENTION

The aim of the invention is to disclose a bed for windmills, including especially sea mills, which makes the establishment of windmills easier, reduces costs and reduces expenditures for reparation and shifting of erroneous parts of the bed.

It is a further aim of the invention to establish a bed of the kind mentioned in the introduction for use in the procedure of installation of windmills in water covered areas, for instance in the sea, which minimizes costs as well as risk in connection with the installation, and which does not have those disadvantages which are mentioned above in connection with the up till now known and proposed beds and procedures.

These aims are achieved by assembling the base of the bed of essentially uniformly formed base piece segments which together make up the base piece of the bed.

The bed according to the invention is characterised in that the base piece of the bed is assembled of essentially uniformly formed base piece segments, together making up the base piece of the bed. The bed is especially suited for installation of windmills at sea or other water covered areas by the use of the procedure mentioned below.

Hereby is achieved that the individual parts of the bed can be prepared on locations, where the necessary production facilities beforehand are present, such as, as an example, plants for cast of concrete elements, and that these individual parts have a size which does not surpass the one which is to be transported with van, so that the individual parts without bigger obstacles can be transported via the road net under application of usually used crafts for transport on land. Sea transports requires furthermore according to the invention lesser requirements for the facilities of transport crafts, and the same goes for the requirements for the harbour facilities, such as storing locations and load/unload remedies as by the usually applied preparation of beds.

Furthermore the advantage is achieved that there is better facilities for performing quality control of the individual parts, and that the expenditures, in case of erroneous parts, are not as big as by the known methods. If an individual element appears to be erroneous this element can without bigger costs be replaced by another element. Furthermore, there is the advantage that the elements can be prepared in a good time beforehand without loading a possibly beforehand limited storing location along the water front, because the elements can be stored in other places, as an example at the production location. Especially for the concrete elements this is an advantage, because these as known have a longer hardening time and that the elements thus can be thoroughly hardened and quality controlled, before they are transported or shipped for the final location.

In an embodiment, where the individual parts of the bed are prepared from the concrete, the individual bed parts can furthermore be decreased to a size which is suitable for a mass production by those a priori applied methods, which as an example can be applied for preparation of concrete elements in the building industry. Also by this the preparation costs become lower than by the preparation of the elements on the location for the final placement, and the quality can be secured and controlled better than by the work in the field.

By the embodiment which is described in claim 2, where also the plinth of the bed is formed from minor individual parts, are the advantages increased, which is mentioned above.

By the embodiment given in claim 3, whereby the individual segments are fixed to each other, the installation and mounting of the bed can be performed in a very easy way. Furthermore, the segments in the base piece, as given in claim 4, can be fixed to each other under application of the plinth. The segments can furthermore, as given in claim 5, be provided with locking devices on the side parts, so that the parts cannot move in relation to each other. Likewise, the individual pieces of plinth pipes can appropriately be fixed in a similar way, such as given in claim 6, so that they are secured in relation to each other in the horizontal plane.

By an embodiment, which is given in claim 7, the segment parts can be provided with plate parts for forming of a sucking skirt, which plate parts appropriately, such as given in claim 8, as well can serve to connect the segment parts with each other.

Appropriately the individual parts are made in pre-stressed concrete, as given in claim 9, where as well bigger security against forming of cracks is achieved, and thus also bigger security against corrosion of the reinforcement of the concrete.

Alternatively, the segment parts can, as given in claim 10, be made in metal instead of concrete, and the bed can be formed as a gravitation bed, as given in claim 11, or as a multiple pile bed, as given in claim 12.

The invention relates furthermore to an application of the bed according to the invention as use for installation of a sea windmill, where the individual parts in the bed such as the base segments and the pieces for the plinth pipes are prepared in an appropriate location, which is distant from the final placing of the bed, and that these individual parts are transported as an example with van craft and/or craft for the final placing, where the individual parts are placed and mounted, characterized in that the base piece of the bed is assembled of essentially uniformly formed base piece segments, together making up the base piece of the bed.

The method for installation of the bed and the windmill is characterised in that the base piece of the bed is assembled of essentially uniformly formed base piece segments, together making up the base piece of the bed.

In connection with the advantages linked with the assembling of bed and windmill on or close to land, namely as mentioned above, that all mounting of cables and other accessories can be finished during appropriate working conditions, and a trial and its like can take place on or close to land, it is additionally achieved that the application of special cost and resource demanding buoyancy bodies are avoided, that only standardized craft and remedies for the shipping can be applied, and that the stability of bed and windmill are secured under all conditions and especially during the dropping.

A considerable improvement in relation to the above mentioned proposed procedures for floating of bed and windmill in one unit is hereby achieved. Firstly standardized craft and tools can be applied, which apart from decreasing the level of costs directly will implicate that the working security is improved, whereby the risk for working misfortunes and bad lucks and derived insurance expenditures are reduced.

For the second, the amount and the duration of the working tasks at sea will be reduced in the most possible way, because no complicated dropping processes, mounting and demounting of buoyancy elements and its like are to be arranged.

For the third, a securing of the stability will be achieved by application of a crane for dropping of bed and windmill, because the crane can lift above the central point of gravity for the construction. The stability will hereby be optimal during all phases of the dropping, including when the buoyancy of the bed is increased.

Appropriately is a craft in form of an offshore barge for the shipping to be applied, as stated in claim 15.

Furthermore, assembling and shipping of two or more windmills with each their bed in one and the same craft can appropriately be performed as stated in claim 16. This is especially appropriate in connection with the establishment of a sea mill park, because the mills here are placed close to each other. When one of the mills thus is lifted by the craft this one can immediately be taken in a tow further to next location, while the crane, e.g. a floating crane, places the first mill on its permanent location. Also hereby the working tasks in the sea will be concentrated and timely shortened, so that the dependence of the climate can be reduced.

By this procedure a commissioning with operationalization samples, system control etc. of the windmill can appropriately, as deviced in claim 17, be performed, when said windmill is assembled with the bed, as an example of an offshore barge, while this is moored at the quay, and when the windmills are provided with all necessary accessories in form of cables, steering systems and its like. Hereby the work load at sea will be reduced considerably, and it will simultaneously be easier to improve faults and defects and perform modifications, while the mills are close to land, because here access to tools, remedies and accessories will be easier.

As characterized in claim 18 a final stabilization of the bed can be expediently performed after this has been placed on the bottom of the sea. An example of this can for the gravitation bed is that a layer of ballast material is placed upon the bed, and for pile beds it can consist in driving, ramming and/or drilling of piles into the bottom of the sea. Furthermore, the grip of the crane can, as stated in claim 19, be preserved during this final stabilization, which especially can be appropriate in connection with pile beds, but can similarly be expedient for gravitation beds under troublesome weather and/or wave conditions.

According to the embodiment of the invention which is given in claim 22 the bed and windmill are assembled on a craft, while this is placed close to land. The location of this place can be selected with respect to more conditions such as an example transport connections on land, distance to the final location of windmills, bottom and water conditions at the pertinent place, availability and presence of necessary tools and aiding machinery such as various types of cranes. The assembling of bed and mill on the craft can take place while this as an example is anchored close to an appropriate coast area, but advantageously the assembling of bed and wind mill will take place as given in claim 23, when the craft is anchored or moored close to a quay berth or its like, so that the bed and parts of the windmill as an example can be handled by means of a crane, such as a mobile crane, which is placed on the quay.

### BRIEF DESCRIPTION OF DRAWINGS

The invention will in the following be explained in more detail with reference to the drawings, where
- Fig. 1: shows an offshore barge, upon which are placed two windmill beds,
- Fig. 2: shows the offshore barge, upon which are placed parts of windmills on the two beds,
- Fig. 3: shows the offshore barge, upon which further parts of the windmills are placed,
- Fig. 4: shows the offshore barge with completely mounted windmills,
- Fig. 5: shows the taking with a tow of the offshore barge by means of a towboat,
- Fig. 6: shows how one of the windmills on the offshore barge is lifted by means of a floating crane,
- Fig. 7: shows how the offshore barge is pulled away, while the floating crane wears the windmill,
- Fig. 8: shows how the windmill by means of the floating crane is placed upon the bottom of the sea,
- Fig. 9: shows the windmill running on its final location on the sea bottom,
- Fig. 10: shows a sea windmill installed with a bed according to the invention,
- Fig. 11: shows a bed according to the invention, seen from the side,
- Fig. 12a: shows a base segment, seen from the side,
- Fig. 12b: shows a base segment, seen from above,
- Fig. 12c: shows a base segment, seen from the end,
- Fig. 13a: shows an axial transverse section of a piece of a plinth pipe,
- Fig. 13b: shows a piece of that plinth pipe, seen from above,
- Fig. 14: shows an axial transverse section of an installed bed according to the invention, and
- Fig. 15: shows partially in a section a bed according to the invention, which is installed on a sea bottom.

### MODES FOR CARRYING OUT THE INVENTION

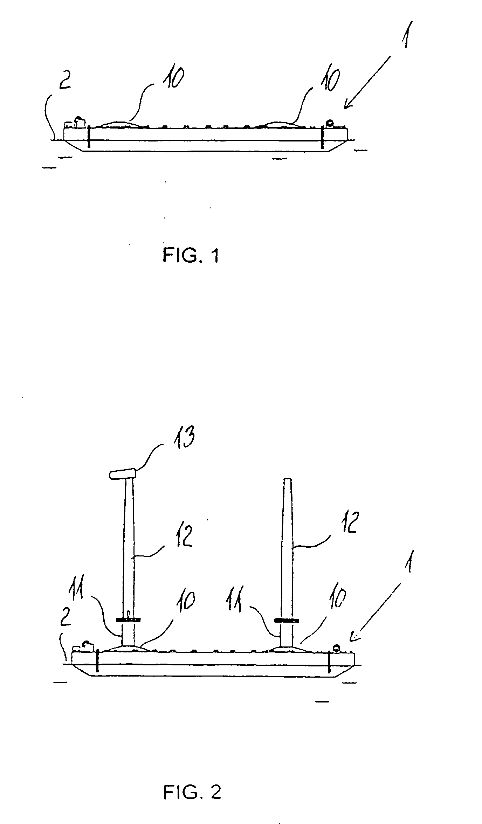

Figs. 1-4 show how the windmill bed and windmill are assembled on a barge, which can be a standard offshore barge. This barge can as an example have a length of about 90 m and a breadth of about 30 m, whereby it will be able to carry 2-3 finished sampled and completely furnished windmills with beds. In the figures an offshore barge is shown, which is prepared for the erection and the transporting of two windmills, but it is obvious that one windmill or more than two windmills per barge can be transported as well, depending on the size of the applied barge.

The barge is anchored and moored close to land, possibly at a quay of an appropriate kind, where after bed and mill parts can be transported on board by means of a (not shown) crane plant. If the barge is moored at a quay a hydraulic mobile crane can as an example be applied, which mobile crane from the quay can hoist up the parts on board and erect the windmill or windmills on the barge. Possibly it may be appropriate to apply more than one mobile crane for the erection of the windmills.

Fig. 1 shows the barge 1 lying in the surface of the sea 2 close to a (not shown) quay, and two windmill beds 10 already moved from the quay to the barge. The shown beds are of the gravitation type, but it is apparent that beds of the pile type can be applied as well, for instance a three-leg bed. Before the placing of the beds a thin layer of sand, tree blocks or its like can be placed upon the deck of the barge 1 to prevent damages to the deck during the erection of the windmills.

Fig. 2 shows how a plinth 11 and a mill tower 12 on each bed 10 by means of a crane are erected under application of for windmills normal erection methods. A mill top or nacelle 13 is mounted upon one of the windmills by means of the crane.

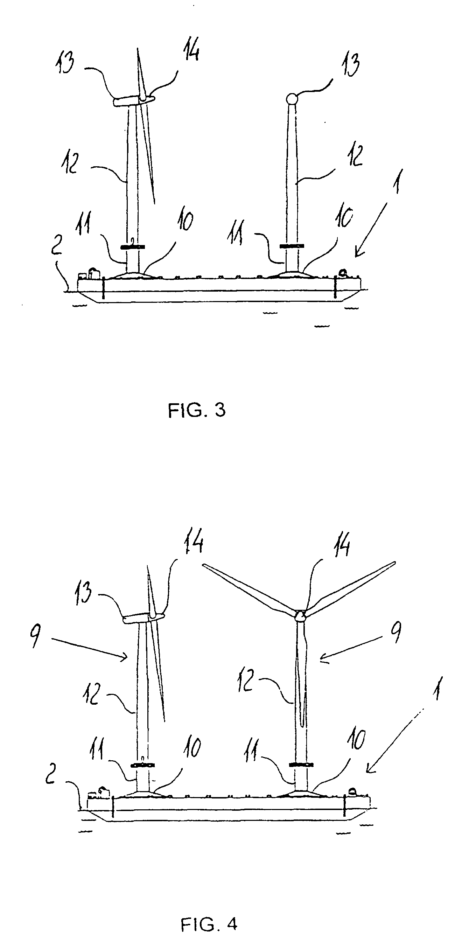

Fig. 3 shows a later step in the procedure, with the mounting upon both windmills of a mill top 13 and furthermore a rotor 14 upon one of the mills. The rotor 14 is similarly mounted by means of the crane, which as mentioned can be a hydraulic mobile crane.

Fig. 4 shows both mills completely assembled and mounted, with all necessary cables, steering equipment etc. mounted on the mills. In this step, where the barge is along the quay the mills can be subjected to initialization trials, system controls etc., so that possible faults or disturbances in the operation can be discovered and corrected, while the windmills are still close to the crane and the other necessary remedies.

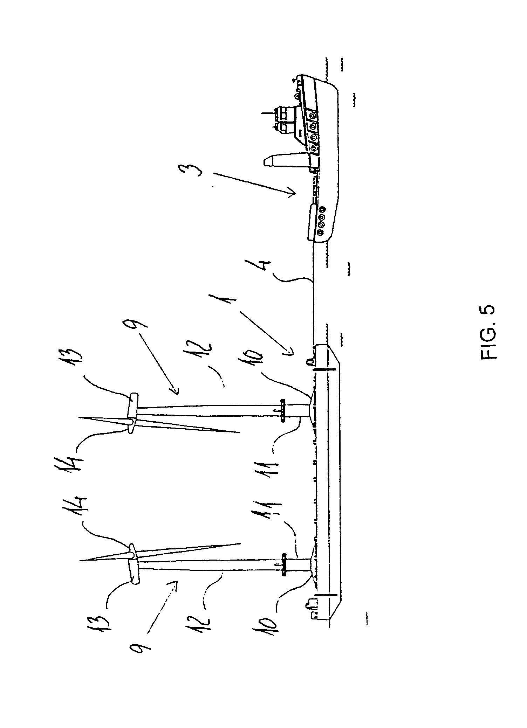

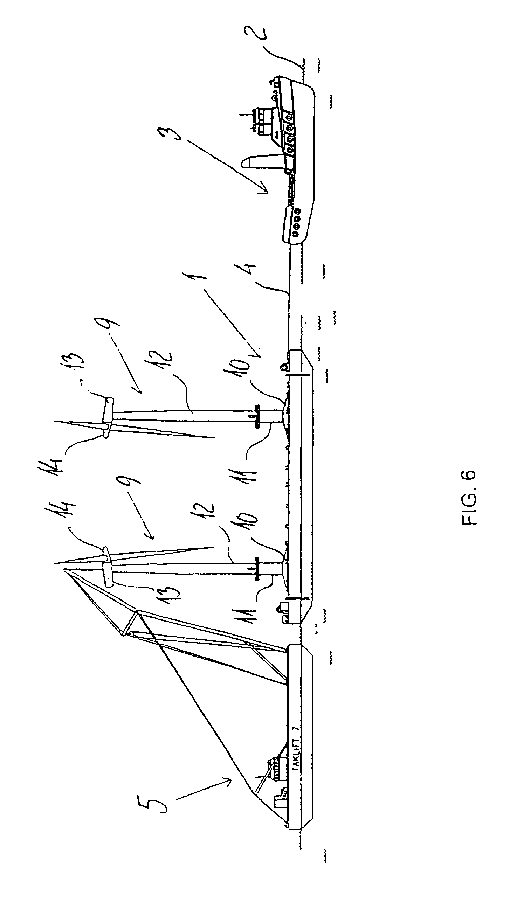

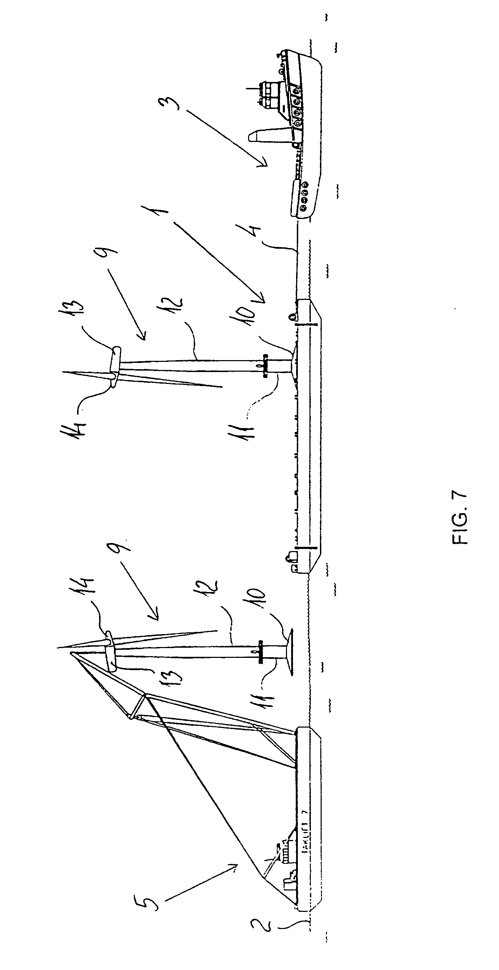

After complete commissioning the barge 1 with the wind mills is taken by tow, as shown in Fig. 5, by means of a tow boat 3 and hawsers 4 to the place for the permanent location, which preferably will be a sea mill park. On this location one of the windmills as shown in Fig. 6 of a floating crane 5 will be released from the barge 1, which then by the tow boat 3 will be taken away by a tow, as shown in Fig. 7. The barge can then be taken by tow to the location for the other windmill 9, where this later on can be lifted from the barge 1 by the floating crane 5.

By the lifting of the windmill 9 the pull connection from the float crane 5 is fixed to an upper part of the windmill 9. As shown in Figs. 6-8 the crane hawser is fixed to the top of the mill 13, but the hawser can likewise catch the upper part of the mill tower 12. The essential in this connection is that the point of action for the float crane 5 in the windmill 9 is above the gravity centre for the windmill, so that the windmill 9 is hanging surely and stably in the float crane 5.

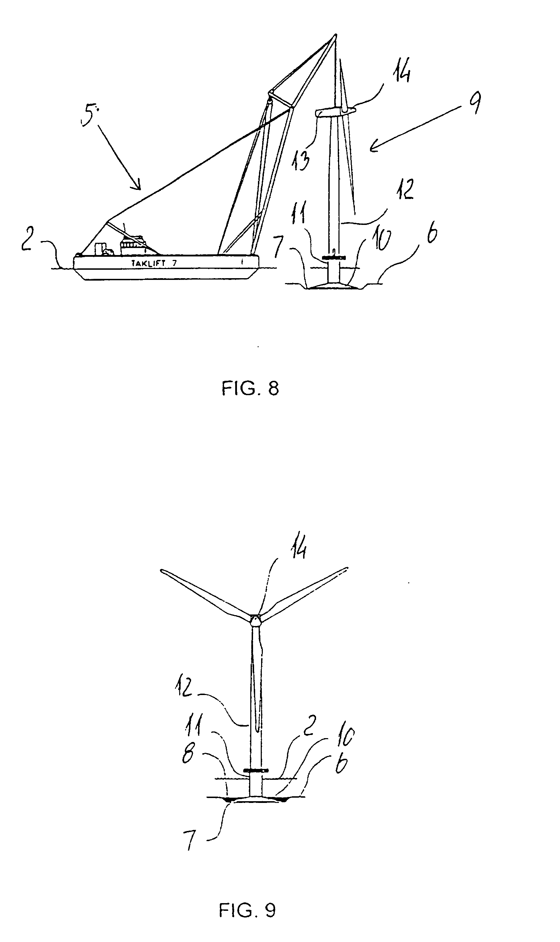

As shown in Fig. 8 a preparation of the sea bottom 6 is performed upon the location of the permanent placing of the windmill 9 by performing an excavation 7, so that a possible layer of mire, mud or another layer of instable material have been removed down to a stable bottom surface. This bottom surface can possibly be covered by a layer of stone material for levelling. To prevent erosion after the processing of the sea bottom and under installation a layer of geotextiles can possibly be placed in and by the excavation. By means of the float crane 5 the windmill 9 is dropped until the bottom of the bed 10 is standing solidly on the bottom of the excavation 7.

Following this the bed can be stabilized in that an extra ballast layer 8 can be placed over the bed by application of a gravitation bed, as shown in Fig. 9.

If in replacement here for a pile bed is applied piles for stabilization of the bed are to be driven down. By application of a gravitation bed, as shown in the example, the stability itself with reckoned buoyancy will be sufficient for allowing the float crane to let the windmill go before the extra ballast 8 is placed, while it by the pile beds will be an advantage for the stability that the float grip of the float crane in the mill is preserved, until the driving down of the piles is completed.

Hereafter, the windmill will be finally placed and stabilized, as shown in Fig. 9, and the necessary connections to land can be established, after which the mill can be put into operation.

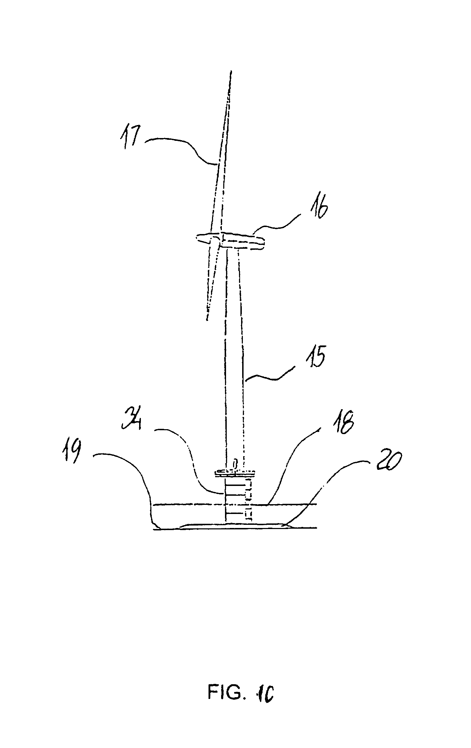

Fig. 10 shows a sea windmill, which is installed with a bed according to the invention, with the windmill with tower 15, nacelle 16, and rotor 17 mounted upon a plinth 34, which is on a base piece of the bed. This base piece is not visible in Fig. 10, in that the bed in this case is formed as a gravitation bed, so that the base piece is covered by a layer of ballast material 20, which pokes up above the sea bottom 19.

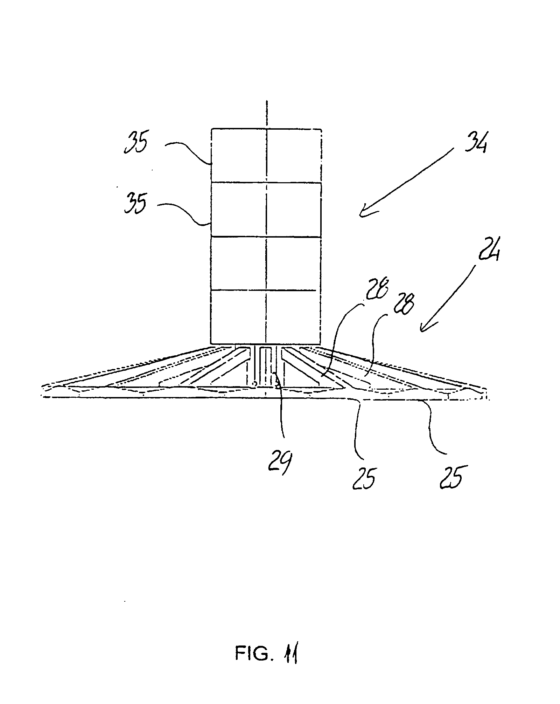

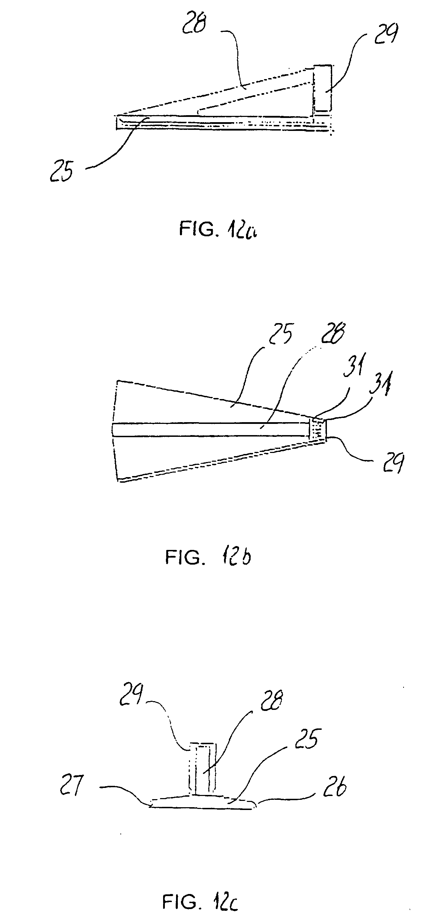

The bed will be described in more detail with reference to the other drawings. In Fig. 11 is thus seen a bed with a base piece 24 and a plinth 34. The base piece 24 consists of an appropriate number of base piece segments 25, as an example sixteen, which each makes up a segment of a circle-formed or essentially circle-formed ground plate for the base piece 24. As it is seen e.g. in Fig. 12a and 12c each base piece segment has at the inner end, that is to say the end which turns inwards against the centre of the base piece, a plinth part 29, which stretches upwards in the direction of the plinth.

Each base piece segment has a sloping beam 28, which stretches from the upper end of the plinth part 29 and down to the outer end of the base piece segment 25. Hereby is achieved that the base piece 24 has a bigger stiffness. As shown in Fig. 12a the sloping beam consists of a beam with constant height, but the sloping beam 28 can as well be performed with variable heights, as an example so that the beam over all by its lower end is linked to the ground plate of the base piece segment 11.

As shown as an example in Fig. 12c which shows a base piece segment seen from the end, uttermost in the base piece, the side streets of the base piece segment, which adjoins to other base piece segments 25, when the segments are gathered to a base piece 24, are provided with locking devices in form of a groove 27 in the one side and a tongue 26 in the other side, so that the base piece segments in the collected form of the base piece are locked to each other in the vertical plane. Other forms of locking devices upon the side planes of the base piece than the shown issues of tongues and grooves may be applied with the same result.

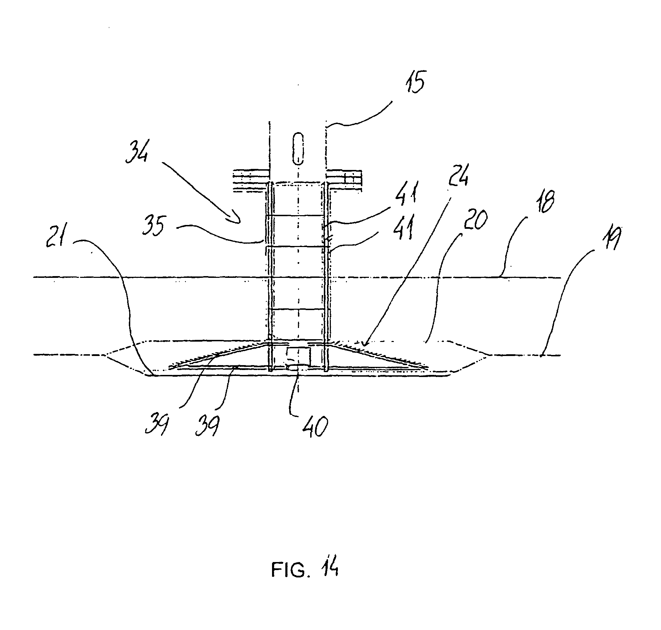

Fig. 12b shows that in the plinth part 29 a number of transitions or pipes 31 are formed, which are intended for transition of bed bolts 41, which, as it is later mentioned in connection with Fig. 14, are led from the base piece up through the plinth 34 to assembling of the bed and for securing of the windmill tower 15.

Furthermore, in each base piece segment 25 formed a number of transitions or pipes 30 are formed, which serve as transition for cables, wires, tie rods or its like, which are used as pre-stressing of those of concrete formed base piece segments 25. These transitions 30, which are not shown in Fig. 12a-c, are set horizontally through the base piece segment and inclined upwards to the sloping beam 28. Thus, by means of the mentioned cables, wires, tie rods or its like, a pre-stressing is performed between the outer parts of the base piece segments and the inner part. In the inner parts of the base piece segments, that is to say the parts which are in the middle of the base piece 24, there is an inner cylindrical cavity, through which assembling elements can be placed, for instance in form of iron rings, to which the mentioned pre-stressed elements can be clamped. By application of the ring-formed elements as clamping elements in the inner cavity is simultaneously achieved that the base piece segments 25 are fixed against each other.

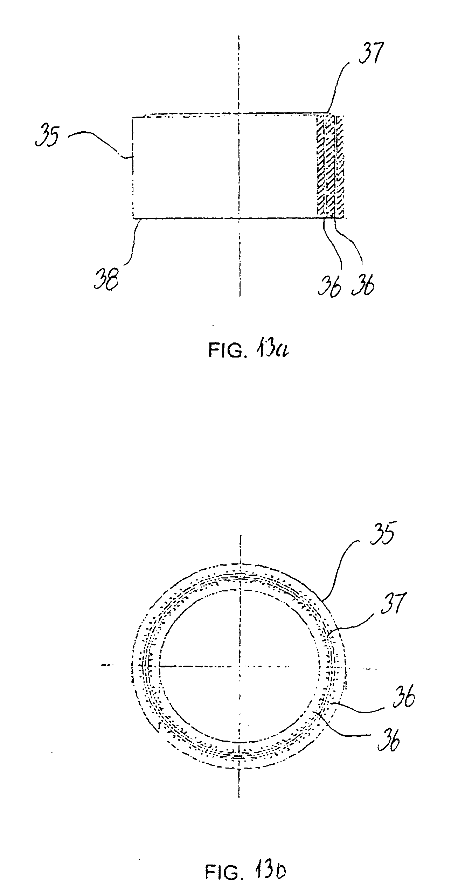

As an example the shown plinth pipe pieces 35 in Fig. 11, which plinth pipe pieces are parts of the plinth 34, are shown in more detail in Figs. 13a and 13b. The plinth pipe pieces are formed as pipe pieces with a suitable height, so that they are easy to transport to the location for placing of the windmill. The necessary height of the plinth 34, as an example to attain higher than the sea surface for the sea windmills, is obtained by installation of a suitable number, in the shown example four, in the figures, the plinth pipe pieces 35 upon each other and upon the assembled upper surface of the plinth parts 29 of the base piece segments. As it is seen in Fig. 13a the plinth pipe pieces 35 are provided with a number of transitions or holes 36, which are set.in axial direction in the walls of the plinth pipe pieces. As is shown in Fig. 13b these transitions are evenly distributed on the two circle peripheries.

Moreover it is shown in Fig. 13a that those planes of plinth pipe pieces 35, which are put against each other, are provided with locking devices, which ensure that the plinth pipe pieces 35 are placed correctly in relation to each other, and that they cannot be moved in the horizontal plane in relation to each other. These locking devices can as an example, as shown, consist of a tongue 37, which are formed in the one end of the pipe piece, and a corresponding groove 38, which is formed in the other end of the pipe piece. Other forms of locking devices can be applied, as an example a ridge can be applied instead of a groove, and the other end of the pipe piece can be formed correspondingly.

The assembling of the bed is illustrated in Fig. 14, where the bed is shown in cross section in an embodiment for a sea windmill. On the sea bottom 19 an excavation 21 has been performed in which the base piece segments 25 are placed. Cables 39 or similar pre-stressing devices are pulled through the transitions 30 in the _base piece segments 25 themselves and the sloping beams 28. These cables are in the middle of the base piece fixed to ring-formed fixing rings 40, and a fastening of the cables towards the periphery of the base piece is performed.

Additionally bed bolts 41 are mounted through the plinth parts 29 of the base piece segments, as an example placed upon the two circle peripheries. By mounting of the plinth pipe pieces 35 these bed bolts are led through the plinth 34, so that the bed bolts 41 are applied both for fastening of the base piece with the plinth 34 and for fixing of the tower 1 by means of a bottom ridge upon this. When the base piece segments are formed of concrete an enforcement can be placed at the bottom of the base piece 24 in form of as an example a ring slice of iron, against which the bed bolts are fixed.

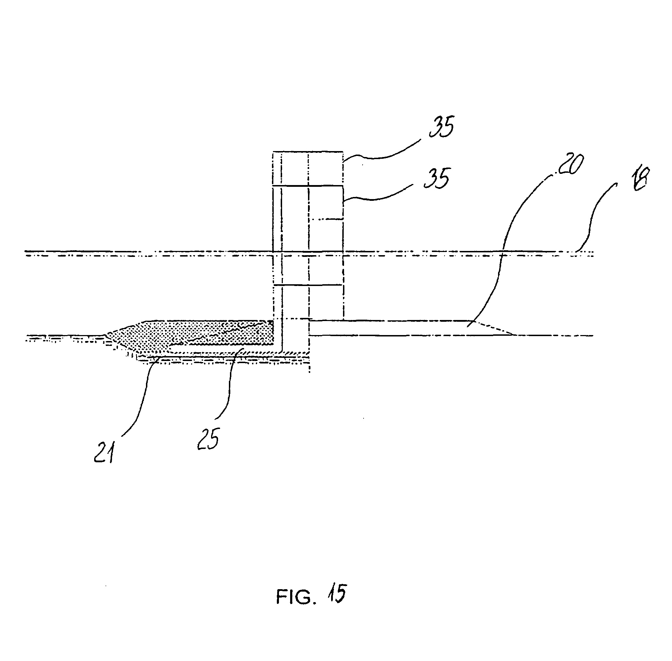

Following assembling of the bed consisting of the base piece 24 and plinth 34 the bed can be fixed to the underground, which as an example can be a sea bottom. In case of a gravitation bed as shown in the figures a ballast layer can thus be place upon the base piece as an example shown in Fig. 15. In case of a pile bed the base piece segment can be formed to such a use. This can as an example be accomplished by forming the transition holes in the base piece segments 11, through which the individual piles can be driven, rapped or drilled down into the underground. Such transition holes for the bed piles can as an example be formed so that they are put through the sloping bar 28, and this can be enforced on the pertinent place, as an example by a thickening of the good by a pipe-formed part on the pertinent place, which pipe-formed part has an outer diameter which is bigger than the normal thickness of the sloping bar.

The base piece segments 25 can furthermore be formed with plate parts, which are put upon the periphery parts of the segments, with the plates put in essentially vertical plane serving as a support for the pre-stressed elements 39. Furthermore, the plate parts can be stretched outwards to the segments, so that they can be applied for furthermore to fix the individual base piece segments to each other. As an example these plate parts can be bolted together or fixed to each other by similar tools. The plate parts can, however, also be formed with a zig-zag-form as an example corresponding to the form of sheet piling plates. The protruding parts can thus be formed with corresponding forms, which catch each other and fix the base piece segments against each other, without application of bolt assemblings or its like.

Furthermore, the mentioned plate parts can be formed so that they stretch downwards under the lowest level for the base piece 24, so that a skirt is formed which is the whole way through around the bed. A further or a possibly independent fixing to the underground is hereby achieved, because the bed is as a sucking bed. The involved elements in the bed, that is to say the base piece segments and the plinth pipe pieces 25 can as mentioned be performed as concrete constructions and especially as pre-stressed construction, but they can also be performed in other materials such as as an example iron and steel.

In the shown examples the pre-stressed elements 39 in the base piece shown as cables or its like, which from the middle of the base piece 24 are directed out to the periphery as spokes in a wheel. The pre-stressed elements 39 can, however, also be formed so that they have directions diametrically the whole way through the base piece from periphery to periphery, and for the middle part of the base piece 24 a subsequent casting with concrete can be performed.

The plinth 34 of the bed can furthermore be formed with a conical lower inner part, which corresponds a likewise formed part with an outer conic form upon the base piece 24, that is to say the upper parts of the plinth parts 15, by which means the assembling of the plinth 34 to the base piece 24 will press the base piece segments 25 against each other and thereby complement or replace other forms for securing of the assembling of the segments in the base piece.

In the figures the bed is illustrated as a bed for a sea windmill, but it is obvious that the bed also can be applied for installation of land-based windmills, because the corresponding advantages with the invention can be attained as well.

### BEST MODE FOR CARRYING OUT THE INVENTION

EXAMPLE. In the following an example is disclosed for calculation and dimensioning by installation of windmills according to the procedure given in the invention and by application of a bed according to the invention.

### 1. INTRODUCTION

The example concentrates on the foundation design. However, the installation method, using a large crane, is an integral part of the total concept. It is therefore described in broad terms. In order to quantify dimensions and costs the foundation is designed for a reference turbine at a reference site. The reference turbine is a Bonus 2 MW wind turbine. The reference site is in the Southern part of the Thames Estuary, some 10 miles North of Whitstable.

The resulting design is a concrete structure consisting of a circular base plate and a central plinth. The tower/foundation interface is above highest astronomical tide. For the reference site mean sea level is assumed to be 5 m with a normal tidal range of +/-2 m. The foundation stability is achieved through a combination of structure weight and added ballast. For ballast a heavy granite type is used. A segmented foundation design is proposed. When assembled from segments the foundation works at quayside are limited to assembly and it is therefore unlikely that foundation works will be a limiting factor in the programme.

### 2. DESIGN ASSUMPTIONS

2.1 Wind turbine data. The foundation is designed for a Bonus 2 MW reference wind turbine with the following main data:

| | | |
|---|---|---|
| Rated power | 2 | MW |
| Rotor diameter | 70 | m |
| Rotor speed | 18 | rpm |
| Hub height above MSL | 55 | m |
| Diameter of tower at bottom flange | 3.5 | m |
| Mass of turbine | 135 | t |

### 2.2 Load cases

The Danish code for pile-supported offshore structures, DS 449, has been used to establish the load cases. Load cases that are evidently without relevance for offshore wind turbines have been removed. Based on reference to relevant wind turbine codes reasonable partial safeties in the combination cases 2.1 - 2.4 have been selected. Ice is retained for the generalised approach even though it is irrelevant for the North Sea.

A preliminary agreement has been reached with Det Norske Veritas concerning the load case definitions and the selected partial safeties. It is likely that the table below can be used for project certification.

| | 1. Operation | 2. Ultimate | | | | 3. Accident |
|---|---|---|---|---|---|---|
| Load case | | 2.1 | 2.2 | 2.3 | 2.4 | |
| Permanent loads | | | | | | |
| Weight of structure | 1,0 | 1,0 | 1,0 | 1,0 | 1,0 | 1,0 |
| Weight of backfill and hydrostatic water pressure | 1,0 | 1,0 | 1,0 | 1,0 | 1,0 | 1,0 |
| Dynamic loads | | | | | | |
| Additional weights | 1,0 | 1,3 | 1,0 | 1,0 | 1,0 | 1,0 |
| Waves & current | ψ | 0,75 | 1,3 | 1,0 | 0,75 | 0 |
| Wind | ψ | 0,5 | 1,0 | 1,3 | 0,5 | 0 |
| Ice | ψ | 0,5 | 0,5 | 0,5 | 1,3 | 0 |
| Speciel loads | | | | | | |
| Load from deformation | 1,0 | 1,0 | 1,0 | 1,0 | 1,0 | 0 |
| Load from accident | 0 | 0 | 0 | 0 | 0 | 1,0 |

ψ to be determined, < 12.3 Loads

### Environmental loads are determined as the worst of either

- 100 year reoccurrence levels with normal offshore calculation methods, or
- 50 year reoccurrence levels with special wind turbine calculation methods

Wind loads are determined by Bonus using the Danish code for load and safety of wind turbines. The procedure applied yields loads correspond to a peak 2-s gust of 60 m/s. This gust wind speed is higher than the 100-year gust wind speed derived from normal offshore calculation methods. Consequently, the special calculation method is used.

Using the maximum stable wave height at the assumed water depth Brown & Root have determined the wave loads. Water depth is taken as the sum of highest astronomical tide and highest storm surge. No allowance has been made for the sheltered location of the reference site. Current loads have not been taken into account.

Load cases 2.2 and 2.3 are design drivers in waters with no ice loads. The loading on the reference wind turbine has been determined for these two cases. An important finding of the study is that for 5 m depth the overturning moment from the wind load of the extreme 2 s gust is much higher than the overturning moment from the wave load of the 100 year wave. The unfactored overturning moments are approximately 32,000 kNm and 3900 kNm, respectively.

Consequently, load case 2.3 is the design driver even at conservative assumptions regarding waves. Furthermore, changes in foundation design leading to an improvement in load carrying capacity at the cost of higher wave loads are likely to be worth while, since the wave loads are of secondary importance.

The overturning moment and shear force are calculated at 1 m below mud line. The foundation diameter at mud line and 1 m above is taken as 5 m (corresponding to a plinth, the wave loads here are probably rather uncertain anyway). The normal force is calculated at tower/foundation interface.

The resulting (factored) loads are presented below:

| | Load case | | 2.2 | 2.3 |
|---|---|---|---|---|
| Overturning moment | M | kNm | 37270 | 45750 |
| Shear force | Q | kN | 1480 | 1465 |
| Normal force | N | kN | 1320 | 1320 |

### 3. FOUNDATION DESIGN

3.1 General design. The foundation is designed as a concrete structure with ballast. It consists of a base plate and a central plinth. The thickness of the base plate is kept relatively thin by using stiffening ribs.

3.2 Seabed preparation. A gravity foundation will in most cases require seabed preparation. The surface needs levelling and a well-defined supporting pad must be established. When scour is anticipated the structure should offer the least possible speed-up effects, ruling out sharp corners, etc. The load carrying capacity of the soil is improved if the foundation is an excavation of some depth.

Cost studies for the present project have shown that seabed preparation does not contribute significantly to the total cost. Other parameters than cost will determine the base level of excavation. Deep excavation will reduce the risk of scour and will improve the soil capacity. The drawback is that the foundation needs to be taller and heavier.

For the present proposal the excavation depth is taken as 1.3 m. A 0.3 m thick stone bed is levelled in the excavation, leaving a net excavated depth of 1.0 m. The excavation diameter is taken as external diameter of the foundation base plate plus 4 metres. This allows some flexibility in the final positioning of the foundation.

Depending on local current and scour conditions it may be necessary to protect a prepared site for the period until the foundation is mounted. In the present case sub sea geotextile mats are placed both in the original excavation and on top of the stone pad.

3.3 Stability. The external dimensions of the foundation can be determined initially on the basis of either stability or soil pressure criteria. Since a submerged gravity foundation is essentially a lightweight structure (due to buoyancy) the soil pressure is expected to be rather low. Consequently, the dimensions are determined using stability criteria, and the resulting soil pressure is determined at the second stage.

The following stability criteria are applied:
- Eccentricity to be below 0.3 (allowing simple plasticity calculations)
- Ratio of shear force to normal force to be below 0.3 (preventing sliding)

The concrete foundation stability is increased with ballast. Parametric studies have shown that the benefits of a heavy ballast type are substantial, even at significantly higher rates. For the proposed foundation Olivine, a heavy granite type, has been selected. This type of granite has been used extensively in the Danish Great Belt Bridge project and is readily available in any desired grain or lump size. The dry uncompacted density is typically taken as 26.5 - 28.0 kN/m³. In the present design a value of 26.0 kN/m³ has been used.

Adequate stability can be achieved for a wide range of base plate diameters and backfill heights. Systematic optimising algorithms can be applied to a certain extent but it has been found difficult to assign realistic weight factors and limit values to all relevant variables. Consequently, at the present stage the optimising has been carried out with reference to four simple specifications:
- Lowest possible installed cost
- Lowest possible concrete mass
- Ballasted base plate to project no more than 1 m above mud line
- Concrete cover over reinforcement to be at least 100 mm

The resulting foundation is circular with 16 metres base plate diameter. The base plate thickness is 400 mm at the stiffening rib and 200 mm at the edges. The backfill height is 1.5 m, projecting 0.9 m above mud line.

3.4 Soil conditions. The predicted soil conditions for the reference site can be provided. The selected location is taken as covered by the area denoted "1c".

The predicted depth range for the geological strata (metres below mud line) is
- Sand waves 0 - 0/2
- Sand ridges 0/2 - 1/10
- London clay 1/10 - 50

In the absence of more accurate data it has been decided to assume that the depth of the sand strata is at least on the order of metres below excavation level. In that case the sand strata will determine the load carrying capacity for budgeting purposes.

The average friction angles of the sand waves and sand ridges are given as 30 and 37 degrees, respectively. In the geotechnical calculations a value of 30 degrees has been used. As expected the soil capacity significantly exceeds the soil pressure of the selected foundation. The calculated soil pressure is 160 kN/m² and the calculated soil capacity is 370 kN/m².

3.5 Concrete structure. The concrete structure consists of a base plate and a central plinth. The thickness of the base plate is kept relatively thin by using stiffening ribs.

In the present proposal a segmented version of the foundation is considered. It has a number of advantages:
- Concrete pouring at quayside is eliminated or vastly reduced
- Segments can be prefabricated well in advance of the project
- Concrete works can be carried out under factory conditions, providing opportunities of better quality management
- Reinforcement can be pretensioned to limit the risk of cracking
- Since segment weights are well below typical weights of wind turbine components, no large crane is needed at quayside

The base plate structure consists of 16 identical pre-fabricated segments. Each segment has a base plate element, a rib, and a plinth element. The static characteristics of the segment correspond to a cantilevered T-beam. Prestressed cables provide the main reinforcement. Centrally the cables are attached to a common steel ring. Laterally they project outside the circumference of the base plate where pretensioning is carried out. The plinth is continued upwards, well above MSL, with additional centre pipe elements. The centre pipe structure consists of four identical pre-fabricated concrete rings stacked on top of each other. Grooves and tongues maintain concentricity.

Two concentric circles of foundation bolts are attached to an anchor plate at the bottom of each base plate segment. They project upwards through the plinth and the centre pipe to the bottom flange of the tower. When tensioned they maintain prestress throughout the centre pipe and plinth assembly. The dimensions of the main reinforcement members and the layout of the secondary reinforcement have not yet been selected.

3.6 Tower/foundation interface. The tower is mounted on the foundation with the two concentric rings of foundation bolts. The bolts are pretensioned to prevent any opening of the flange connection even at extreme overturning moment.

A good level of end face flatness of the pre-fabricated centre pipe elements can be achieved within reasonable tolerances. Consequently, grouting between foundation and tower flange is not expected to be necessary for a satisfactory flange connection. However, grouting will provide a flexible means of alignment, allowing the correction of foundation inclinations of up to 0.5 degrees. Grouting is therefore retained in the design

3.7 Access arrangements. The access arrangements consist of a boat landing and an access platform. No detail design has been carried out.

3.8 Cable connections. The turbine is connected to the local grid in the wind farm with submerged cables. Between the turbines the cables are ploughed or washed into the seabed. From the seabed at the foundation periphery to the transformer switchgear the cables are pulled into J-tubes.

The vertical part of the J-tubes can be located on either the outside or the inside of the foundation. Both locations have their benefits and drawbacks. Protection is better with the inside location while the flexibility and adaptability is better with the outside location.

### 4. INSTALLATION

4.1 General methodology. The general methodology of installation is based on a principle of minimal offshore works. To the largest extent possible the works are completed onshore or at quayside.

The foundation and turbine assembly is carried out on a suitable barge at quayside. The barge is towed to the wind farm site and the complete foundation/turbine structure is lifted from the barge and placed on the stone pad in the excavation. Ballast is subsequently deposited on the foundation.

4.2 On-shore facilities. The onshore facilities should be sufficient for turbine pre-assembly and for handling of foundation elements before positioning on the barge. It is anticipated that an area of 2-4 acres will be sufficient.

4.3 Foundation assembly. Foundation assembly is carried out on the shipping barge. Use of a standard North Sea offshore barge is assumed. Having dimensions of 30 x 90 m the barge is expected to be able to carry 2-3 fully assembled turbines.

Prior to foundation assembly the barge is moored at the quayside. The top surface is covered with a thin layer of sand or wooden blocks to prevent handling damage to the barge. The 16 base plate segments are placed on the barge and are fitted together. The anchor rings are inserted and the main reinforcement members are pretensioned. The centre pipe elements are placed on the plinth and finally the foundation bolts are inserted and attached to the bottom anchor segments.

Internal J-tubes must be positioned during assembly. External J-tubes, access platforms, moorings, anodes, etc., can all be fitted after assembly. All weights can be lifted with the crane used for turbine assembly.

4.4 Turbine assembly. Turbine assembly is carried out in the same way as for an on-shore installation. The tower is erected in two parts. The nacelle is lifted on top of the tower, and finally the rotor is fitted to the main shaft. A standard 400 t mobile crane assisted by a standard 160 t mobile crane is capable of carrying out all assembly works. Following erection all internal assemblies are completed and commissioning is carried out to the extent possible with the local grid at quayside.

4.5 Site preparation. The site is prepared in accordance with the excavation requirements outlined above. Geotextile mats are used to minimise erosion or scour in the period from preparation to turbine erection.

4.6 Shipping and installation. The barge is towed from quayside to site. A large sheer legs barge is anchored at site. The shipping barge is positioned under the lifting hook and the lift is attached. The turbine is lifted some metres above barge deck, the barge is towed away, and the turbine is placed on the prepared stone bed. A ballast barge is towed in and ballast is deposited on the foundation.

### 5. PROGRAMME

5.1 General methodology. The general methodology of installation is based on a principle of minimal offshore works. To the largest extent possible the works are completed onshore or at quayside. The foundation and turbine assembly is carried out on a suitable barge at quayside. The barge is towed to the wind farm site and the complete foundation/turbine structure is lifted from the barge and placed on the stone pad in the excavation. Ballast is subsequently deposited on the foundation.

## Claims

1. Bed for a windmill, which bed comprises a base piece (24) and a plinth (34) placed on the base piece, upon which a windmill tower (15) can be placed and fixed, **char- acterized** in that the base piece (24) of the bed is assembled of essentially uniformly formed base piece segments (25), together making up the base piece (24) of the bed.

2. Bed according to claim 1, **characterized in that** the plinth part (29) comprises a number of essentially uniformly formed plinth pipe pieces (35), which are placed upon each other on the base piece (24), where they constitute consolidation for the windmill tower (15).

3. Bed according to claim 1 or 2, **characterized in that** the base piece segments (25) are fastened to each other, preferably by means of one or more preferably ring-formed clamps (40), which are placed in the middle of the base piece.

4. Bed according to claim 1, 2 or 3, **characterized in that** the base piece segments (25) are fastened to each other by means of the plinth (34), preferably by a number of bed bolts (41) being fastened through those parts of the base piece segments, that are placed towards the middle of the base piece (24), and which bed bolts are led up through the plinth (34).

5. Bed according to one or more of the claims 1-4, **characterized in that** sides of the base piece segments (25), which are adjacent to each other in the base piece (24), are formed so that base piece segments are locked to each other mainly in the vertical plane, preferably by the sides being formed with tongues (26) and grooves (27).

6. Bed according to one or more of the claims 2-5, **characterized in that** edges of the plinth pipe pieces (35), which are adjacent to each other in the plinth part (29), are formed so that the plinth pipe pieces lock each other mainly in the horizontal plane, and preferably by the edges being formed with tongues (37) and grooves (38).

7. Bed according to one or more of the claims 1-6, **characterized in that** the base piece segments (25) at their ends, which turn away from the middle of the base piece (24), are provided with essentially vertically placed plate parts, which protrude down under the lowest horizontal level of the base piece (24) of the bed, so that a skirt is formed along the periphery of the base piece.

8. Bed according to claim 7, **characterized in that** the mentioned plate parts have a length which is bigger than the largest width of the base piece segment (25), so that the plate parts protrude to both sides of the base piece segments (25), and that the protruding pieces from the plate parts are formed so that they can work together.

9. Bed according to one or more of the claims 1-8, **characterized in that** the base piece segments (25) are formed in pre-stressed concrete, with pipe-formed openings (30) in the base piece segments (25), through which cables or its like (39) can be pulled, with the cables placed from the middle of the base piece towards the periphery, and with fastening of the cables between one or more fixing parts (40) in the middle of the base piece and fixing parts at the periphery of the base piece.

10. Bed according to one or more of the claims 1-8, **characterized in that** the base piece segments (25) are formed of metal, preferably iron.

11. Bed according to one or more of the claims 1-10, **characterized in that** the bed is a gravitation bed.

12. Bed according to one or more of the claims 1-10, **characterized in that** the base piece segments (25) are formed so that one or more transition openings, which are intended to take up bed piles which are led down into the underground are formed in one or more base piece segments (25) within the base piece (24).

13. Application of bed according to one or more of the claims 1-12 for use by installation of a sea windmill, where the individual parts such as base piece segments (25) and plinth pipe pieces (35) forming part of the bed are made on an appropriate location, which is in distance from the final location of the bed, and that these individual parts are transported as example with a van craft and/or a craft to the final location, where the individual parts are placed and mounted, **characterized in that** the base piece (24) of the bed is assembled of essentially uniformly formed base piece segments (25), together making up the base piece (24) of the bed.

14. Method for installation of windmills at sea, which windmills are placed upon beds according to one or more of claims 1-12, being arranged on the sea bottom with assembling of bed (10,11,24,25,34) and windmill (9) comprising tower (12), mill top (13) and rotor (14) in essentially one piece on another location than the final location of the windmill, wherein bed (10,11,24,25,34) and windmill (9) in one piece are shipped by means of a craft (3) and brought to the place (7) of the final location, and wherein bed and windmill in one piece with application of a crane (5) such as a floating crane are placed on the final location, with the placing of the bed upon the sea bottom (6), which in the pertinent place possibly beforehand is prepared with the intention of a stable placement of bed with windmill, **characterized in that** the base piece (24) of the bed is assembled of essentially uniformly formed base piece segments (25), together making up the base piece (24) of the bed.

15. Method according to claim 14, **characterized in that** bed and windmill are assembled on a craft in form of a barge (1) of a type which normally is applied for offshore working tasks, and that the shipping is taking place by means of this barge.

16. Method according to claims 14 or 15, **characterized in that** bed and windmill for two or more windmills are assembled and shipped jointly with the application of one and the same craft (3).

17. Method according to one or more of the claims 14-16, **characterized in that** after bed and windmill are assembled a commissioning is performed with operationalization samples, system control etc., before a shipping is performed to the place for the final location.

18. Method according to one or more of the claims 14-17, **characterized in that** after windmill with bed has been placed on the sea bottom a final stabilization of the bed is performed.

19. Method according to claim 18, **characterized in that** the grip of the crane in the windmill is maintained during the final stabilization of the bed for the windmill.

20. Method according to one or more of the claims 14-19, **characterized in that** the bed of the windmill is a gravitation bed.

21. Method according to one or more of the claims 14-19, **characterized in that** the bed of the windmill is supported by piles, which are driven down into the sea bottom.

22. Method according to one or more of the claims 14-21, **characterized in that** the assembling of bed and windmill is performed on a craft in form of a barge or its like while it is situated close to land.

23. Method according to claim 22, **characterized in that** the assembling of bed and windmill takes place close to a quay or its like.

## Patentansprüche

1. Bett für ein Windrad, das ein Basisteil (24) und einen auf dem Basisteil angeordneten Säulenfuß (34), auf dem ein Windradturm (15) angeordnet und befestigt werden kann, umfasst, **dadurch gekennzeichnet, dass** das Basisteil (24) des Bettes aus im Wesentlichen gleichmäßig geformten Basisteilsegmenten (25) zusammengefügt ist, die zusammen das Basisteil (24) des Bettes ergeben.

2. Bett nach Anspruch 1, **dadurch gekennzeichnet, dass** das Säulenfußteil (29) zahlreiche im Wesentlichen gleichmäßig geformte Säulenfuß-Rohrteile (35) umfasst, die auf dem Basisteil (24) übereinander angeordnet sind, wo sie eine Befestigung für den Windradturm (15) bilden.

3. Bett nach Anspruch 1 oder 2, **dadurch gekennzeichnet, dass** die Basisteilsegmente (25) vorzugsweise mittels einer oder mehrerer vorzugsweise ringförmiger Klammern (40), die in der Mitte des Basisteils angeordnet sind, aneinander befestigt sind.

4. Bett nach Anspruch 1, 2 oder 3, **dadurch gekennzeichnet, dass** die Basisteilsegmente (25) mittels des Säulenfußes (34) aneinander befestigt sind, vorzugsweise durch eine Anzahl von Bettbolzen (41), die durch jene Teile der Basisteilsegmente, die zur Mitte des Basisteils (24) hin angeordnet sind, befestigt sind, wobei die Bettbolzen durch den Säulenfuß (34)nach oben geführt sind.

5. Bett nach einem oder mehreren der Ansprüche 1-4, **dadurch gekenn- zeichnet,** dass Seiten der Basisteilsegmente (25), die in dem Basisteil (24) aneinander angrenzen, in der Weise geformt sind, dass Basisteilsegmente hauptsächlich in der vertikalen Ebene und vorzugsweise durch die mit Zungen (26) und Nuten (27) geformte Seiten aneinander verriegelt sind.

6. Bett nach einem oder mehreren der Ansprüche 2-5, **dadurch gekenn- zeichnet,** dass Kanten der Säulenfuß-Rohrteile (35), die in dem Säulenfußabschnitt (29) aneinander grenzen, in der Weise geformt sind, dass die Säulenfuß-Rohrteile hauptsächlich in der horizontalen Ebene und vorzugsweise durch die Kanten, die mit Zungen (37) und Nuten (38) versehen sind, aneinander verriegelt sind.

7. Bett nach einem oder mehreren der Ansprüche 1-6, **dadurch gekenn- zeichnet**, dass die Basisteilsegmente (35) an ihren Enden, die von der Mitte des Basisteils (24) wegweisen, mit im Wesentlichen vertikal angeordneten Plattenabschnitten versehen sind, die unter das niedrigste horizontale Niveau des Basisteils (24) des Bettes vorstehen, so dass längs des Umfangs des Basisteils eine Einfassung gebildet wird.

8. Bett nach Anspruch 7, **dadurch gekennzeichnet, dass** die genannten Plattenabschnitte eine Länge besitzen, die größer als die größte Breite des Basisteilsegments (25) ist, so dass die Plattenabschnitte zu beiden Seiten der Basisteilsegmente (25) vorstehen, und dass die von den Plattenabschnitten vorstehenden Teile in der Weise geformt sind, dass sie zusammenwirken können.

9. Bett nach einem oder mehreren der Ansprüche 1-8, **dadurch gekenn- zeichnet,** dass die Basisteilsegmente (25) in vorgespanntem Beton ausgebildet sind, wobei in den Basisteilsegmenten (25) rohrförmige Öffnungen (30) vorhanden sind, durch die Kabel oder dergleichen (39) gezogen werden können, wobei die Kabel von der Mitte des Basisteils zu dessen Umfang angeordnet sind und wobei die Kabel zwischen einem oder mehreren Befestigungsabschnitten (40) in der Mitte des Basisteils und Befestigungsabschnitten am Umfang des Basisteils befestigt sind.

10. Bett nach einem oder mehreren der Ansprüche 1-8, **dadurch gekenn- zeichnet,** dass die Basisteilsegmente (25) aus Metall, vorzugsweise Eisen, gebildet sind.

11. Bett nach einem oder mehreren der Ansprüche 1-10, **dadurch ge- kennzeichnet,** dass das Bett ein Gravitationsbett ist.

12. Bett nach einem oder mehreren der Ansprüche 1-10, **dadurch ge- kennzeichnet**, dass die Basisteilsegmente (25) in der Weise ausgebildet sind, dass in einem oder in mehreren Basisteilsegmenten (25) in dem Basisteil (25) eine oder mehrere Übergangsöffnungen ausgebildet sind, die Bettpfeiler aufnehmen sollen, die nach unten in den Untergrund geführt sind.

13. Anwendung eines Bettes nach einem oder mehreren der Ansprüche 1-12 zur Verwendung bei der Installation eines Meereswindrades, wobei die einzelnen Abschnitte wie etwa die Basisteilsegmente (25) und die Säulenfuß-Rohrteile (35), die einen Teil des Bettes bilden, an einem geeigneten Ort hergestellt werden, der von dem endgültigen Ort des Bettes entfernt ist, wobei diese einzelnen Teile beispielsweise mit einem Transportschiff und/oder einem Wasserfahrzeug zu dem endgültigen Ort transportiert werden, wo die einzelnen Teile angeordnet und montiert werden, **dadurch gekenn-** zeichnet, dass das Basisteil (24) des Bettes aus im Wesentlichen gleichmäßig geformten Basisteilsegmenten (25) zusammengefügt ist, die zusammen das Basisteil (24) des Bettes ergeben.

14. Verfahren zum Installieren von Windrädern im Meer, wobei die Windräder auf Betten nach einem oder mehreren der Ansprüche 1-12 angeordnet sind, die auf dem Meeresboden angeordnet werden, wobei Bett (10, 11, 24, 25, 34) und Windrad (9), das einen Turm (12), einen Windradoberteil (13) und einen Rotor (14) umfasst, im Wesentlichen einteilig an einem anderen als dem endgültigen Ort des Windrades zusammengefügt werden, wobei Bett (10, 11, 24, 25, 34) und Windrad (9) in einem Teil mittels eines Wasserfahrzeugs (3) verschifft und an die Stelle (7) des endgültigen Ortes gebracht werden und wobei Bett und Windrad in einem Teil unter Anwendung eines Krans (5) wie etwa eines Schwimmkrans an dem endgültigen Ort angeordnet werden, wobei die Anordnung des Bettes auf dem Meeresboden (6), der an dem dauerhaften Platz eventuell im Voraus vorbereitet worden ist, um eine stabile Anordnung des mit Windrad versehenen Bettes zu schaffen, **dadurch gekennzeichnet, dass** das Basisteil (24) des Bettes aus im Wesentlichen gleichmäßig geformten Basisteilsegmenten (25) zusammengefügt ist, die zusammen das Basisteil (24) des Bettes ergeben.

15. Verfahren nach Anspruch 14, **dadurch gekennzeichnet, dass** Bett und Windrad auf einem Schiff in Form eines Frachtkahns (1) des Typs, der normalerweise für Küstenarbeit-Aufgaben verwendet wird, zusammengefügt werden und dass das Verschiffen mittels dieses Frachtkahns erfolgt.

16. Verfahren nach Anspruch 14 oder 15, **dadurch gekennzeichnet , dass** Bett und Windrad für zwei oder mehr Windräder gemeinsam durch Verwenden ein und desselben Wasserfahrzeugs (3) zusammengefügt und verschifft werden.

17. Verfahren nach einem oder mehreren der Ansprüche 14-16, **dadurch gekennzeichnet, dass** nach der Zusammenfügung von Bett und Windrad eine In-Dienst-Stellung durch Operationalisierung von Proben, der Systemsteuerung und dergleichen ausgeführt wird, bevor ein Verschiffen zu der Stelle des endgültigen Ortes erfolgt.

18. Verfahren nach einem oder mehreren der Ansprüche 14-17, **dadurch gekennzeichnet , dass** nach der Anordnung des Windrades mit Bett auf dem Meeresboden eine endgültige Stabilisierung des Bettes erfolgt.

19. Verfahren nach Anspruch 18, **dadurch gekennzeichnet , dass** der Eingriff des Krans an dem Windrad während der endgültigen Stabilisierung des Bettes für das Windrad beibehalten wird.

20. Verfahren nach einem oder mehreren der Ansprüche 14-19, **dadurch gekennzeichnet, dass** das Bett des Windrades ein Gravitationsbett ist.

21. Verfahren nach einem oder mehreren der Ansprüche 14-19, **dadurch gekennzeichnet, dass** das Bett des Windrades durch Pfeiler unterstützt ist, die in den Meeresboden hinabgetrieben werden.

22. Verfahren nach einem oder mehreren der Ansprüche 14-21, **dadurch gekennzeichnet, dass** die Zusammenfügung von Bett und Windrad auf einem Wasserfahrzeug in Form eines Frachtkahns oder dergleichen, der sich in Landnähe befindet, ausgeführt wird.

23. Verfahren nach Anspruch 22, **dadurch gekennzeichnet, dass** die Zusammenfügung von Bett und Windrad in der Nähe eines Kais oder dergleichen erfolgt.

## Revendications

1. Fondation pour une éolienne, ladite fondation comprenant un composant de base (24) and un socle (34) placé sur le composant de base, sur lequel un pylône d'éolienne (15) peut être placé et fixé, **caractérisée en ce que** le composant de base (24) de la fondation est assemblé des sections de composant de base formées essentiellement uniformément (25), constituant ensemble le composant de base (24) de la fondation.

2. Fondation selon la revendication 1, **caractérisée en ce que** le socle (29) comporte un nombre de composants de tube de socle formés essentiellement uniformément (35) qui sont placés l'un au-dessus de l'autre sur le composant de base (24) ou ils constituent la consolidation du pylône (15).

3. Fondation selon la revendication 1 ou 2, **caractérisée en ce que** les sections du composant de base (25) sont fixées l'une à l'autre, de préférence au moyen d'au moins une ou plusieurs brides de préférence annulaires (40) qui sont placées au milieu du composant de base.

4. Fondation selon la revendication 1, 2 ou 3, **caractérisée en ce que** les sections du composant de base (25) sont fixées l'une à l'autre au moyen du socle (34) de préférence par un nombre de boulons de fondation (41) étant fixés à travers les parties des sections du composant de base, qui sont placées vers le milieu du composant de base (24) et quels boulons de fondation sont guidés à travers le socle (34).

5. Fondation selon l'une ou plusieurs des revendications 1-4, **caractérisée en ce que** des côtés des sections de composant de base (25) qui sont adjacents l'un de l'autre dans le composant de base (24), sont formés de sorte que les sections du composant de base sont verrouillées l'une à l'autre essentiellement dans un plan vertical, de préférence de sorte que les côtés sont formés avec des saillies (26) et des rainures (27).

6. Fondation selon l'une ou plusieurs des revendications 2-5, **caractérisée en ce que** des arêtes des composants de tube du socle (35) qui sont adjacentes l'une à l'autre dans la section du socle (29), sont formées de sorte que les composants de tube du socle s'entrebloquent de préférence dans un plan horisontal et de préférence **en ce que** les arêtes sont formées avec des saillies (37) et des rainures (38).

7. Fondation selon l'une ou plusieurs des revendications 1-6, **caractérisée en que** les sections du composant de base (25) à leurs extrémités qui sont dirigées à partir du milieu du composant de base (24), sont munies de parties de plaque orientées essentiellement verticalement, qui saillissent au-dessous du niveau horisontal le plus bas du composant de base (24) de la fondation, de sorte qu'un socle est formée au long de la périphérie du composant de base.

8. Fondation selon la revendication 7, **caractérisée en que** les parties de plaques mentionnées ont une longueur qui est plus grande que la largeur la plus grande de la section du composant de base (25), de sorte que les parties de plaque saillissent sur les deux côtés des sections du composant de base (25), et que les composants saillant des parties de plaque sont formés de sorte qu'ils peuvent coopérer.

9. Fondation selon l'une ou plusieurs des revendications 1-8, **caractérisée en que** les sections du composant de base (25) sont formées en béton précontraint, avec des ouvertures formées en tubes (30) dans les sections du composant de base (25), à travers lesquelles des câbles ou analogue (39) peuvent être traînés, avec les câbles placés à partir du milieu du composant de base vers la périphérie, et avec des fixations des câbles entre un ou plusieurs organes de fixation (40) au milieu du composant de base et les organes de fixation sur la périphérie du composant de base.

10. Fondation selon l'une ou plusieurs des revendications 1-8, **caractérisée en que** les sections du composant de base (25) sont formées en métal, de préférence en fer.

11. Fondation selon l'une ou plusieurs des revendications 1-10, **caractérisée en que** la fondation est une fondation de gravitation.

12. Fondation selon l'une ou plusieurs des revendications 1-10, **caractérisée en que** les sections du composant de base (25) sont formées de sorte qu'une ou plusieurs ouvertures de transition qui sont destinées à recueillir des pilots de fondations qui sont guidés dans le sous-sol, sont formées dans une ou plusieurs sections du composant de base (25) dans le composant de base (24).

13. Application d'une fondation selon l'une ou plusieurs des revendications 1-12, pour l'utilisation en installant une éolienne marine, où les parties individuelles comme par exemple des sections du composant de base (25) et des composants du tube du socle (35) constituant une partie de la fondation, sont fabriqués sur un emplacement approprié, qui est à distance de l'emplacement final de la fondation, et que ces parties individuelles sont transportées par exemple avec véhicule routier et/ou bateau à l'emplacement final, où les parties individuelles sont placées et montées, **caractérisée en ce que** le composant de base (24) de la fondation est assemblé de sections du composant de base formées essentiellement uniformément, constituant ensemble le composant de base (24) de la fondation.

14. Procédé d'installation d'éoliennes marines, quelles éoliennes sont placées sur des fondations selon l'une ou plusieurs des revendications 1-12, étant arrangées sur le fond de mer avec assemblage de la fondation (10, 11, 24, 25, 34) et de l'éolienne (9) comprenant le pylône (12), le sommet d'éolienne (13) et le rotor (14) dans essentiellement une pièce sur un autre emplacement que l'emplacement final de l'éolienne, la fondation (10, 11, 24, 25, 34) et l'éolienne (9) en une seule pièce étant embarquées au moyen d'un bateau (3) et transportées à l'endroit (7) de l'emplacement final, et la fondation et l'éolienne en une seule pièce avec l'application d'une grue (5) comme par exemple une grue flottante étant placées sur l'emplacement final, avec l'emplacement de la fondation sur le fond de mer (6), qui préalablement sur l'endroit en question éventuellement a été préparé dans le but d'un emplacement stable de la fondation avec éolienne, **caractérisé en ce que** le composant de base (24) de la fondation est assemblé des sections de composant de base formées essentiellement uniformément, constituant ensemble le composant de base (24) de la fondation.

15. Procédé selon la revendication 14, **caractérisé en ce que** la fondation et l'éolienne sont assemblées sur un bateau sous forme de chaland (1) du type qui normallement est utilisé pour des tâches off-shore et que l'expédition s'effectue au moyen de ce chaland.

16. Procédé selon les revendications 14 ou 15, **caractérisé en ce que** la fondation et l'éolienne pour deux ou plusieurs éoliennes sont assemblées et expédiées globalement en utilisant le même bateau (3).

17. Procédé selon l'une ou plusieurs des revendications 14-16, **caractérisé en ce qu'**après l'assemblage de la fondation et de l'éolienne, une mise en service est effectuée avec des essais de fonctionnement, des contrôles de système etc, avant qu'une expédition soit effectuée à l'endroit de l'emplacement final.

18. Procédé selon l'une ou plusieurs des revendications 14-17, **caractérisé en ce qu'**après la mise en place de l'éolienne avec la fondation sur le fond de mer, une stabilisation finale de la fondation est effectuée.

19. Procédé selon la revendication 18, **caractérisé en ce que** la prise de la grue dans l'éolienne est maintenue pendant la stabilisation finale de la fondation pour l'éolienne.

20. Procédé selon l'une ou plusieurs des revendications 14-19, **caractérisé en ce que** la fondation de l'éolienne est une fondation de gravitation.

21. Procédé selon l'une ou plusieurs des revendications 14-19, **caractérisé en ce que** la fondation de l'éolienne est supportée par pilots qui sont plantés dans le fond de mer.

22. Procédé selon l'une ou plusieurs des revendications 14-21, **caractérisé en ce que** l'assemblage de la fondation et de l'éolienne est effectué sur un bateau sous forme d'un chaland ou analogue pendant qu'il est situé près du terre.

23. Procédé selon la revendication 22, **caractérisé en ce que** l'assemblage de la fondation et l'éolienne s'effectuera près d'un quai ou analogue.
